# EUROPÄISCHE PATENTSCHRIFT

(11) **EP 1 728 707 B1**
(45) Veröffentlichungstag und Bekanntmachung des Hinweises auf die Patenterteilung: **27.05.2009**
(21) Anmeldenummer: 06006215.5
(22) Anmeldetag: 25.03.2006
(51) Int. Cl.: B62D 21/15, B62D 25/04

(54) **Fahrgastzelle für einen Personenkraftwagen**
Passenger compartment of a motor vehicle
Compartiment passagers d'un véhicule automobile

(30) Priorität: 01.06.2005 US 141389
(43) Veröffentlichungstag der Anmeldung: 06.12.2006
(73) Patentinhaber: Dr. Ing. h.c. F. Porsche Aktiengesellschaft, 70435 Stuttgart (DE)
(72) Erfinder: Wolkersdorfer, Werner, 75242 Neuhausen (DE); Tattersall, Terence, Michigan 48306 (US); Winter, Fred, 71277 Rutesheim (DE); Krase, Dietmar, 70563 Stuttgart (DE)

(56) Entgegenhaltungen:
- EP-A1- 1 547 874
- DE-A1- 19 811 215
- DE-A1- 19 943 296
- DE-A1-8102004 039 47
- FR-A1- 2 698 600
- JP-A- 2 041 987

## Beschreibung

Die Erfindung betrifft eine Fahrgastzelle für einen Personenkraftwagen mit jeweils einer B-Säule auf jeder Karosserieseite gemäß dem Oberbegriff des Patentanspruchs 1.

Eine solche Fahrgastzelle ist aus DE 10 2004 039 478 bekannt. Aus der FR 2 698 600 A1 geht eine Fahrgastzelle für einen Personenkraftwagen mit jeweils einer B-Säule auf jeder Karosserieseite hervor, wobei zur Erhöhung der Quersteifigkeit der Fahrgastzelle bei Seitenaufprallbelastungen hinter den vorderen Sitzen eine Einrichtung vorgesehen ist, die durch einen quer zur Fahrzeuglängsrichtung verlaufenden, etwa horizontal ausgerichteten geschlossenen Hohlträger gebildet wird. Dieser Hohlträger verbindet direkt die beiden gegenüberliegend angeordneten B-Säulen und ist mit diesen fest verbunden. In Höhenrichtung gesehen verläuft dieser Hohlträger etwa in Höhe eines Sitzkissens einer hinteren Sitzanlage.

Aufgabe der Erfindung ist es, für einen zweitürigen, lediglich vordere Sitze und einen Mittelmotor aufweisenden Personenkraftwagen, eine wirkungsvolle Einrichtung zur Erhöhung der Quersteifigkeit der Fahrgastzelle zu schaffen, wobei die freie Gestaltung der vorderen Sitze hinsichtlich ihrer Verstellbarkeit in Fahrzeuglängsrichtung und der Lehnenneigung nicht beeinträchtigt wird.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, dass die aus einem mittigen Hohlträger und zwei bogenförmigen Seitenteilen bestehende, etwa in Schulterhöhe eines Fahrzeuginsassens angeordnete Einrichtung einerseits eine gute Funktion bei einem Seitenaufprall gewährleistet und dass andererseits ein großer Verstellbereich der vorderen Sitze in Fahrzeuglängsrichtung und die Winkeleinstellbarkeit der Rückenlehne sichergestellt ist.

Der mittige Längsträger wird durch ein Vierkantrohr aus hochfestem Werkstoff gebildet, wobei der Querschnitt dieses Vierkantrohrs und die Wanddicke so ausgebildet sind, dass hohe Kräfte in Querrichtung aufgenommen werden können. Der Versatz des Hohlträgers in Längsrichtung zu den beiden vorgelagerten B-Säulen garantiert die Verschiebbarkeit und Winkeleinstellbarkeit der vorderen Sitze. Der Hohlträger ist vorzugsweise über einen mittigen Halter an eine Oberseite eines darunterliegenden domförmigen Aufnahmeraumes angeschlossen. Die bogenförmigen Seitenteile der Einrichtung sind mit ihrem äußeren Ende jeweils an die angrenzende B-Säule angeschlossen und können aufgrund ihrer hohlträgerartigen Ausbildung Kräfte wirkungsvoll übertragen. Zusätzliche, zwischen den Seitenteilen und dem domförmigen Aufnahmeraum verlaufende hintere Stützelemente sorgen zusammen mit den Seitenteilen dafür, dass die Kräfte sowohl nach vorne als auch nach hinten wirkungsvoll übertragen werden können. Der Hohlträger kann zudem zur Festlegung eines bügelförmigen Elementes herangezogen werden, um das dahinter liegende Ladegut in Längsrichtung zu sichern.

Ein Ausführungsbeispiel der Erfindung ist in den Zeichnungen dargestellt und wird im folgenden näher erläutert. Es zeigt
- Fig. 1: eine perspektivische Teilansicht von schräg hinten auf einen Personenkraftwagen,
- Fig. 2: eine Teilseitenansicht des Personenkraftwagens in schematischer Darstellung,
- Fig. 3: eine perspektivische Ansicht von schräg vorne auf die Fahrgastzelle des Personenkraftwagens im Bereich der B-Säulen mit der erfindungsgemäßen Einrichtung,
- Fig. 4: eine perspektivische Ansicht von schräg hinten auf die Fahrgastzelle im Bereich der B-Säulen mit der erfindungsgemäßen Einrichtung,
- Fig. 5: eine Ansicht von hinten auf die Fahrgastzelle im Bereich der B-Säulen mit der erfindungsgemäßen Einrichtung,
- Fig. 6: einen Schnitt nach der Linie VI-VI der Fig. 5 in größerer Darstellung und
- Fig. 7: eine perspektivische Teilansicht von schräg vorne auf den Hohlträger und den Halter der Einrichtung in größerer Darstellung.

Ein durch einen Sportwagen gebildeter Personenkraftwagen 1 weist eine Aufbaustruktur 2 auf, die im dargestellten Bereich ein Dach 3, Seitentüren 4, hintere Seitenteile 5, eine schwenkbare Heckklappe 6 und ein Heckendteil 7 umfasst.

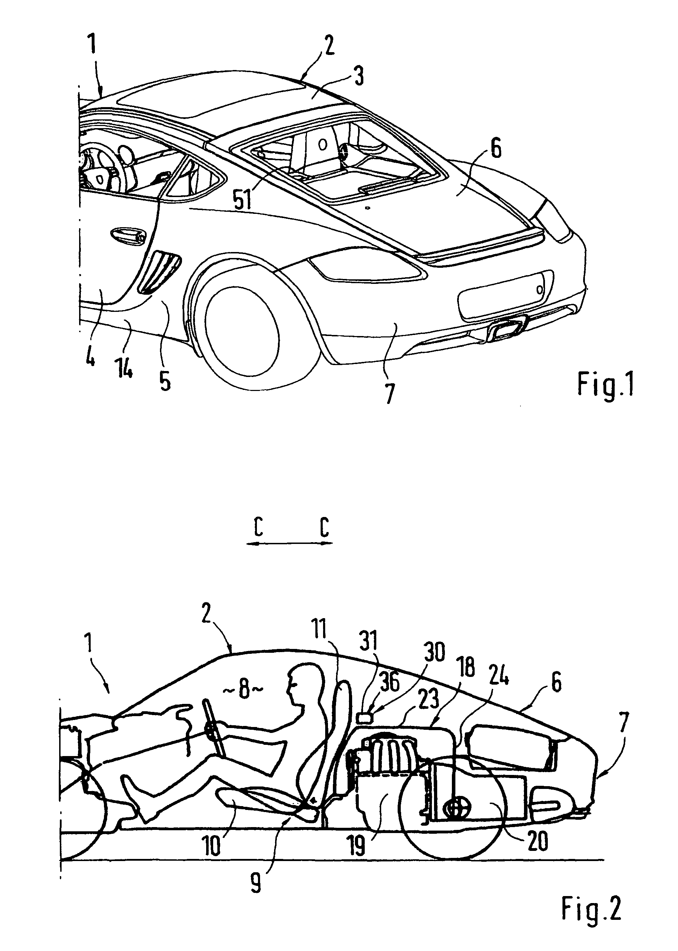

Der lediglich zwei Seitentüren 4 aufweisende Personenkraftwagen 1 weist einen Fahrgastraum 8 auf, in dem Sitze 9 für einen Fahrer und einen Beifahrer angeordnet sind. Jeder Sitz 9 setzt sich aus einem unteren Sitzteil 10 und einer gelenkig mit dem Sitzteil 10 verbundenen Rückenlehne 11 zusammen. Das Sitzteil 10 ist in Fahrzeuglängsrichtung C-C verschiebbar ausgebildet und die Rückenlehne 11 ist hinsichtlich ihrer Neigung verstellbar. In Fig. 2 ist die hinterste Stellung des Sitzes 9 gezeigt.

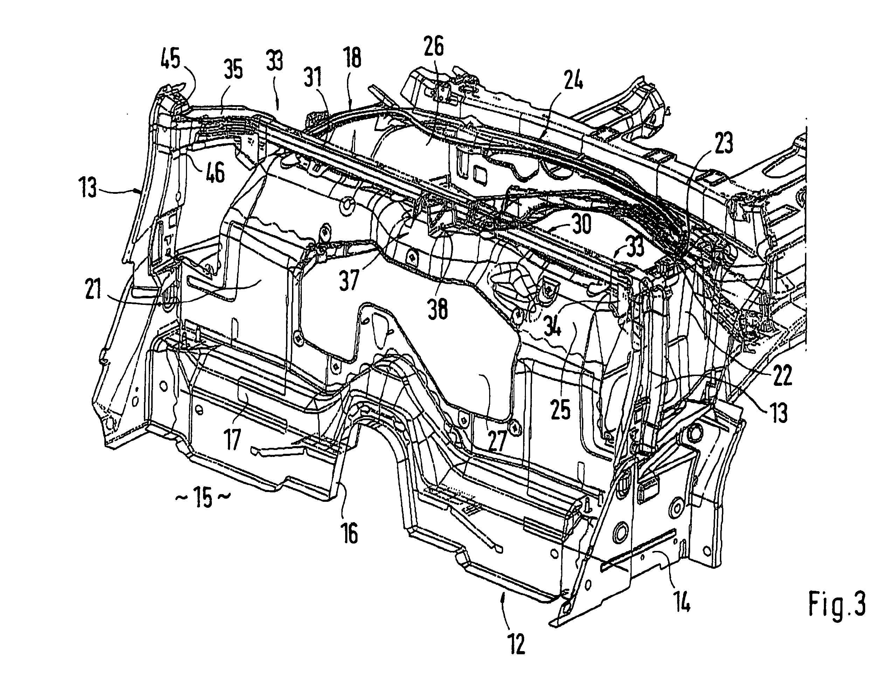

Eine Fahrgastzelle 12 des Personenkraftwagens 1 umfasst gemäß Fig. 3 auf jeder Karosserieseite eine aufrechte, etwa bis in Höhe einer Fensterbrüstung verlaufende B-Säule 13, die mit ihrem unteren Rand jeweils an einen angrenzenden Seitenschweller 14 angebunden ist, sowie einen Fahrzeugboden 15 und einen Mitteltunnel 16.

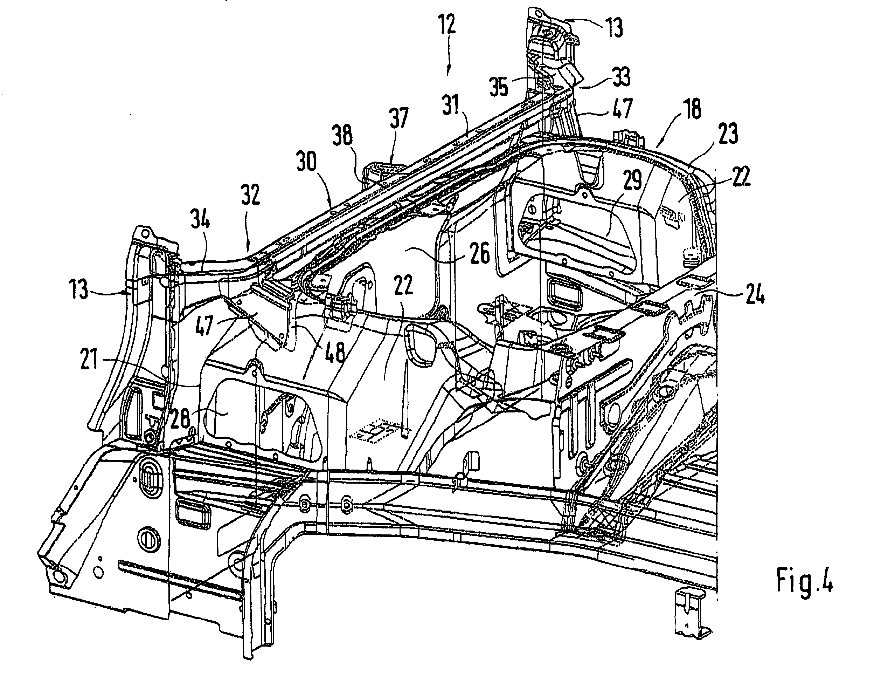

Beide B-Säulen 13 sind im Bereich des Fahrzeugbodens 15 über eine untere Querträgerstruktur 17 miteinander und mit dem Mitteltunnel 16 kraftübertragend verbunden. Benachbart der Rückenlehne 11 der Sitze 9 umfasst die Fahrgastzelle 12 einen domartigen, nach oben ragenden Aufnahmeraum 18, der einen Mittelmotor 19 und ein nachfolgend angeordnetes Getriebe 20 einer Antriebseinrichtung aufnimmt (Fig. 2). Der nach unten hin offene domartige Aufnahmeraum 18 umfasst einen vorderen, querverlaufenden Wandabschnitt 21, seitliche aufrechte Wandabschnitte 22, einen oberen Wandabschnitt 23 und einen hinteren, querverlaufenden Wandabschnitt 24. Der vordere Wandabschnitt 21 ist in einem oberen Bereich 25 nach hinten hin abgeschrägt. Am vorderen und oberen Wandabschnitt 21, 23 des domartigen Aufnahmeraumes 18 sind Öffnungen 26, 27 vorgesehen, die durch nicht näher dargestellte Deckel vollständig verschließbar sind. Ferner sind in vorderen Bereichen der seitlichen Wandabschnitte 22 des Aufnahmeraumes 18 Durchbrüche 28, 29 zur Luftzu- bzw. -abführung zum Mittelmotor 19 angeordnet (Fig. 4).

Zur Erhöhung der Quersteifigkeit der Fahrgastzelle 12 bei Seitenaufprallbelastungen ist etwa in Schulterhöhe eines Fahrzeuginsassen eine Einrichtung 30 vorgesehen, die einen mittigen, quer zur Fahrzeuglängsrichtung C-C verlaufenden, etwa horizontal ausgerichteten geschlossenen Hohlträger 31 umfasst, der an seinen beiden seitlich außenliegenden Enden 32, 33 über - in der Draufsicht gesehen - bogenförmig ausgebildete Seitenteile 34, 35 kraftübertragend zumindest an die in Fahrzeuglängsrichtung C-C gesehen vorgelagerten B-Säulen 13 angeschlossen ist. Der im Querschnitt gesehen geschlossene Hohlträger 31 weist entlang seiner Quererstreckung einen geradlinigen Formverlauf auf und wird im Ausführungsbeispiel durch ein Vierkantrohr aus hochfestem Werkstoff gebildet. Die Querschnittsform und die Wanddicke des Vierkantrohres werden so gewählt, dass hohe Kräfte in Fahrzeugquerrichtung aufgenommen werden können. Anstelle des Vierkantrohres könnte jedoch auch ein Rohr mit rundem, ovalem oder mehreckigem Querschnitt verwendet werden. Auch ein aus Blechpressteilen zusammengesetzter Hohlträger 31 wäre denkbar.

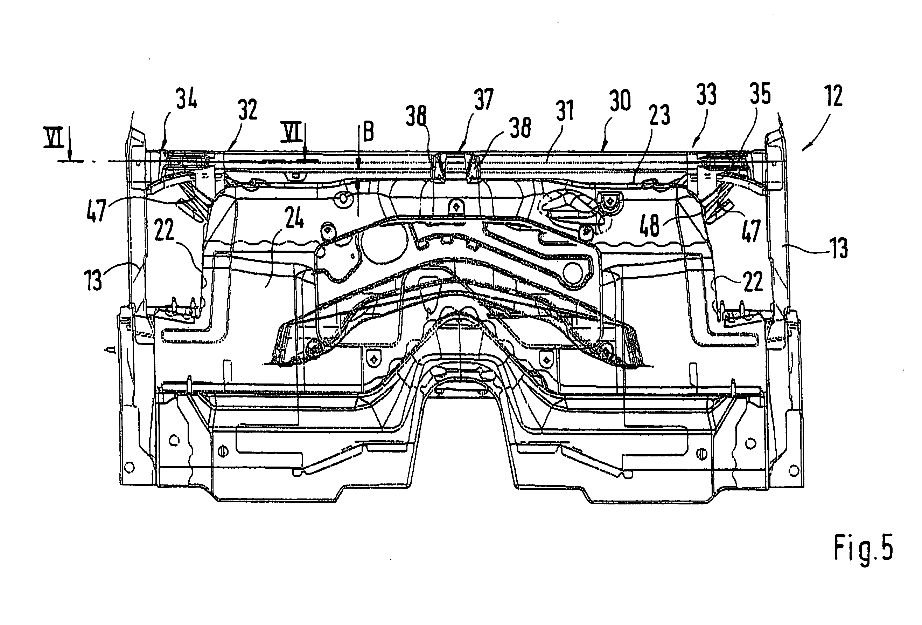

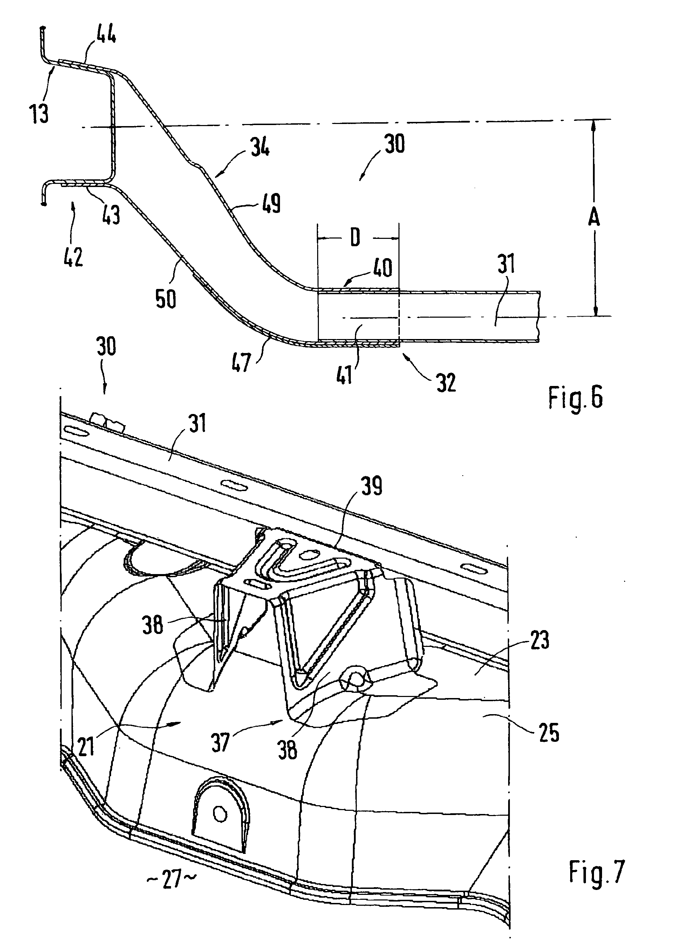

Der Hohlträger 31 verläuft in Fahrzeuglängsrichtung C-C gesehen mit Abstand A nach hinten versetzt zu den vorgelagerten B-Säulen 13 und zwar oberhalb und in einem vorderen Endbereich 36 des domartig ausgebildeten Aufnahmeraumes 18 der Fahrgastzelle 12 (Fig. 6). Zwischen der Oberseite des oberen Wandabschnitts 23 des Aufnahmeraumes 18 und der Unterseite des Hohlträgers 31 erstreckt sich ein durchgehender Spalt (Abstand B) (Fig. 5). Der sich nahezu über die gesamte Innenraumbreite erstreckende querverlaufende Hohlträger 31 ist unter Zwischenschaltung zumindest eines Halters 37 an die obere Wandung 23 des Aufnahmeraumes 18 angeschlossen. Im Ausführungsbeispiel ist ein mittiger Halter 37 vorgesehen. Es könnten jedoch auch mehrere in Querrichtung mit Abstand zueinander angeordnete Halter 37 für den Hohlträger 31 vorgesehen sein.

Der dem Hohlträger 31 vorgelagerte Halter 37 ist mittels zweier aufrechter Fußabschnitte 38 auf die obere Wandung 23 des Aufnahmeraumes 18 aufgesetzt und über einen querverlaufenden Steg 39 mit der Vorderseite des Hohlträgers 31 verbunden (siehe Fig. 7).

Jedes Seitenteil 34, 35 der Einrichtung 30 wird im Ausführungsbeispiel durch wenigstens zwei Blechpressteile 49, 50 gebildet, die zu einer geschlossenen Hohlträgerstruktur 51 zusammengesetzt sind. Ein innenliegendes Ende 40 jedes Seitenteiles 34, 35 umschließt den Hohlträger 31 schuhartig und ist in einem gemeinsamen Überlappungsbereich 41 fest mit dem innenliegenden Hohlträger 31 verbunden, beispielsweise durch Schweißen, Kleben, Nieten oder dergleichen. Der Überlappungsbereich 41 weist eine Quererstreckung D auf. Das außenliegende Ende 42 der Seitenteile 34, 35 ist über querverlaufende vordere und hintere Abstellungen 43, 44 an gleichgerichtete Schenkel der B-Säule 13 angeschlossen und mit diesen fest verbunden. Obere und untere abgestellte Flansche 45, 46 der Seitenteile 34, 35 sind darüber hinaus an eine gleichgerichtete in Fahrzeuglängsrichtung C-C verlaufende innere Wand der B-Säule 13 angeschlossen und mit dieser fest verbunden, beispielsweise verschweißt. Die Seitenteile 34, 35 könnten jedoch auch durch Gussteile gebildet werden.

Eine noch wirkungsvollere Abstützung und Krafteinleitung wird dadurch erzielt, dass jedes Seitenteil 34, 35 zusätzlich über ein hinteres profiliertes Stützelement 47 an einen seitlichen, oberen Bereich 48 des domartigen Aufnahmeraumes 18 angeschlossen ist.

An der Oberseite des querverlaufenden Hohlträgers 31 kann ein querverlaufendes bügelförmiges Element 51 zur Ladegutsicherung angeordnet sein, das fest am stabilen Hohlträger 31 verankert ist.

## Patentansprüche

1. Fahrgastzelle (12) für einen Personenkraftwagen (1) mit jeweils einer B-Säule (13) auf jeder Karosserieseite, wobei zur Erhöhung der Quersteifigkeit der Fahrgastzelle (12) bei Seitenaufprallbelastungen hinter den vorderen Sitzen (9) eine Einrichtung (30) vorgesehen ist, die einen quer zur Fahrzeuglängsrichtung verlaufenden, etwa horizontal ausgerichteten geschlossenen Hohlträger (31) umfasst und die seitlichen Enden der Einrichtung an die angrenzenden B-Säulen angeschlossen sind, wobei der mittige Hohlträger (31) zu den B-Säulen (13) nach hinten hin versetzt ist und an seinen beiden seitlich, außen liegenden Enden (32, 33) - in der Draufsicht gesehen - bogenförmige Seitenteile (34, 35) aufweist, **dadurch gekennzeichnet, dass** die Einrichtung (30) etwa in Schulterhöhe eines Fahrzeuginsassen angeordnet ist, wobei sich der quer verlaufende Hohlträger (31) oberhalb und in einem vorderen Endbereich (36) eines domartig nach oben ragenden Aufnahmeraumes (18) der Fahrgastzelle (12) erstreckt und dieser einen Mittelmotor und ein nachfolgend angeordnetes Getriebe einer Antriebseinrichtung aufnimmt und dass der Hohlträger (31) unter Zwischenschaltung zumindest eines Halters (37) an dem darunter liegenden domartigen Aufnahmeraum (18) angeschlossen ist und dass die bogenförmigen Seitenteile (34, 35) durch wenigstens zwei Blechpressteile (49, 50) gebildet und zu einer geschlossenen Hohlträgerstruktur zusammengesetzt sind und diese Seitenteile (34, 35) kraftübertragend an die in Fahrzeuglängsrichtung gesehen vorgelagerten B-Säulen (13) angeschlossen sind.

2. Fahrgastzelle nach Anspruch 1, **dadurch gekennzeichnet, dass** der im Querschnitt gesehen geschlossene Hohlträger (31) durch ein Vierkantrohr aus einem hochfesten Werkstoff gebildet wird.

3. Fahrgastzelle nach den Ansprüchen 1 und 2, **dadurch gekennzeichnet, dass** der Hohlträger (31) in Fahrzeuglängsrichtung (C-C) gesehen mit Abstand (A) zu den vorgelagerten B-Säulen (13) verläuft.

4. Fahrgastzelle nach den Ansprüchen 1 bis 3, **dadurch gekennzeichnet, dass** der Hohlträger (31) in Höhenrichtung gesehen mit Abstand (B) zu einer oberen Wandung (23) des domartigen Aufnahmeraums (18) der Fahrgastzelle verläuft.

5. Fahrgastzelle nach Anspruch 1, **dadurch gekennzeichnet, dass** ein innen liegendes Ende (40) jedes Seitenteiles an den Hohlträger (31) schuhartig anschließt und in einem gemeinsamen Überlappungsbereich (41) fest mit dem Hohlträger (31) verbunden ist.

6. Fahrgastzelle nach einem oder mehreren der vorangegangenen Ansprüche, **dadurch gekennzeichnet, dass** das außen liegende Ende (42) der Seitenteile (34, 35) der Einrichtung (30) über quer verlaufende vordere und hintere Abstellungen (43, 44) an gleichgerichtete Schenkel der B-Säule (13) angeschlossen ist.

7. Fahrgastzelle nach einem oder mehreren der vorangegangenen Ansprüche, **dadurch gekennzeichnet, dass** das außen liegende Ende (42) der Seitenteile (34, 35) der Einrichtung (30) über längs verlaufende obere und untere abgestellte Flansche (45, 46) an eine gleichgerichtete innere Wand der B-Säule (13) angeschlossen ist.

8. Fahrgastzelle nach einem oder mehreren der vorangegangenen Ansprüche, **dadurch gekennzeichnet, dass** jedes Seitenteil (34, 35) zusätzlich über ein hinteres profiliertes Stützelement (47) an einem vorderen Eckbereich des domartigen Aufnahmeraumes (18) angeschlossen ist.

## Claims

1. Passenger compartment (12) of a motor vehicle (1), with a respective B pillar (13) on each side of the vehicle body, wherein, in order to increase the transverse rigidity of the passenger compartment (12) in the event of side impact loads, a device (30) is provided behind the front seats (9), said device comprising an approximately horizontally oriented, closed hollow support (31) running transversely with respect to the longitudinal direction of the vehicle, and the lateral ends of the device are connected to the adjacent B pillars, wherein the central hollow support (31) is offset to the rear with respect to the B pillars (13) and has curved side parts (34, 35) at its two laterally outer ends (32, 33) - as seen in top view, **characterized in that** the device (30) is arranged approximately at shoulder height of a vehicle occupant, with the transversely running hollow support (31) extending above and in a front end region (36) of a receiving space (18) of the passenger compartment (12), which receiving space protrudes upwards in the manner of a dome and receives a central engine and a downstream gearbox of a drive device, and **in that** the hollow support (31) is connected, with the interconnection of at least one holder (37), to the dome-like receiving space (18) located thereunder, and **in that** the curved side parts (34, 35) are formed by at least two sheet-metal pressed parts (49, 50) and are put together to form a closed hollow support structure and said side parts (34, 35) are connected in a force-transmitting manner to the B pillars (13) mounted upstream, as seen in the longitudinal direction of the vehicle.

2. Passenger compartment according to Claim 1, **characterized in that** the hollow support (31) which is closed, as seen in cross section, is formed by a square tube made of high-strength material.

3. Passenger compartment according to Claims 1 and 2, **characterized in that** the hollow support (31) runs at a distance (A), as seen in the longitudinal direction (C-C) of the vehicle, from the B pillars (13) mounted upstream.

4. Passenger compartment according to Claims 1 to 3, **characterized in that** the hollow support (31) runs at a distance (B), as seen in the vertical direction, from an upper wall (23) of the dome-like receiving space (18) of the passenger compartment.

5. Passenger compartment according to Claim 1, **characterized in that** an inner end (40) of each side part adjoins the hollow support (31) in the manner of a shoe and is connected fixedly to the hollow support (31) in a common overlapping region (41).

6. Passenger cell according to one or more of the preceding claims, **characterized in that** the outer end (42) of the side parts (34, 35) of the device (30) is connected to equidirectional limbs of the B pillar (13) via front and rear bent portions (43, 44) running transversely.

7. Passenger compartment according to one or more of the preceding claims, **characterized in that** the outer end (42) of the side parts (34, 35) of the device (30) is connected to an equidirectional inner wall of the B pillar (13) via upper and lower bent flanges (45, 46) running longitudinally.

8. Passenger compartment according to one or more of the preceding claims, **characterized in that** each side part (34, 35) is additionally connected via a rear, profiled supporting element (47) to a front corner region of the dome-like receiving space (18).

## Revendications

1. Compartiment passager (12) d'un véhicule automobile (1) doté respectivement d'un montant B (13) sur chaque côté de la carrosserie, un dispositif (30) étant prévu derrière les sièges avant (9) afin d'accroître la rigidité transversale du compartiment passager (12) en présence de charges liées à un choc latéral, ledit dispositif comprenant un support creux (31) s'étendant transversalement par rapport à la direction longitudinale du véhicule et étant fermé et orienté quelque peu horizontalement et les extrémités latérales du dispositif étant raccordées aux montants B connexes, le support creux (31) central étant décalé vers l'arrière par rapport aux montants B (13) et comportant des parties latérales (34, 35) en forme d'arc au niveau de ses deux extrémités (32, 33) reposant en côté vers l'extérieur - dans la vue en élévation, **caractérisé en ce que** le dispositif (30) est disposé approximativement au niveau des épaules d'un passager assis dans le véhicule, le support creux (31) à extension transversale s'étendant au-dessus et à l'intérieur d'une zone d'extrémité (36) avant d'un espace de logement (18) en forme de dôme saillant vers le haut du compartiment passager (12) et ledit espace logeant un moteur central et un engrenage de boîte de vitesses disposée à la suite et **en ce que** le support creux (31) est raccordé par intercalage d'au moins un support (37) au niveau de l'espace de logement (18) en forme de dôme situé en dessous et que les parties latérales (34, 35) en forme d'arc sont formées par au moins deux parties en tôle compressée (49, 50) et assemblées en une structure de support creux et que ces parties latérales (34, 35) sont raccordées aux montants B (13) disposés à l'avant dans la direction longitudinale du véhicule de façon à transmettre les forces en présence.

2. Compartiment passager selon la revendication 1, **caractérisé en ce que** le support creux (31) fermé vu dans la section transversale est formé par un tube carré fabriqué à partir d'un matériau à haute rigidité.

3. Compartiment passager selon les revendications 1 et 2, **caractérisé en ce que** le support creux (31) s'étend dans la direction longitudinale du véhicule (C-C) à une certaine distance (A) des montants B (13) disposés à l'avant.

4. Compartiment passager selon les revendications 1 à 3, **caractérisé en ce que** le support creux (31) s'étend dans la direction verticale à une certaine distance (B) d'une paroi supérieure (23) de l'espace de logement (18) en forme de dôme du compartiment passager.

5. Compartiment passager selon la revendication 1, **caractérisé en ce qu'**une extrémité (40) reposant à l'intérieur de chaque partie latérale est raccordée comme un patin au support creux (31) et est reliée fixement au support creux (31) dans une zone de chevauchement (41) commune.

6. Compartiment passager selon une ou plusieurs revendications précédentes, **caractérisé en ce que** l'extrémité (42) reposant vers l'extérieur des parties latérales (34, 35) du dispositif (30) est raccordée au côté parallèle du montant B (13) via des dispositifs d'arrêt (43, 44) avant et arrière s'étendant transversalement.

7. Compartiment passager selon une ou plusieurs revendications précédentes, **caractérisé en ce que** l'extrémité (42) reposant à l'extérieur des parties latérales (34, 35) du dispositif (30) est raccordée à une paroi intérieure parallèle du montant B (13) via des brides (45, 46) d'arrêt supérieure et inférieure s'étendant dans le sens de la longueur.

8. Compartiment passager selon une ou plusieurs revendications précédentes, **caractérisé en ce que** chaque partie latérale (34, 35) est raccordée en outre à une zone d'angle avant de l'espace de logement (18) en forme de dôme via un élément d'appui (47) profilé arrière.
